# EUROPEAN PATENT APPLICATION

(11) **EP 1 587 239 A1**
(43) Date of publication of application: **19.10.2005**
(21) Application number: 04425269.0
(22) Date of filing: 14.04.2004
(51) Int. Cl.: H04L 12/00, H04L 29/00

(54) **Method of and apparatus for server-side management of buddy lists**

(71) Applicant: Siemens Mobile Communications S.p.A., 20126 Milano (IT)
(72) Inventor: Blaiotta, Donatella, 27100 Pavia (IT); De Zen, Giovanna, 31011 Asolo (TV) (IT)

(57) **Abstract**

There are provided a method of and an apparatus for server-side management of contact lists in a presence enabled application supported by a communication system and having a client side (CA) on a user equipment (UE) and a server side (AS) within a presence enabled network (PEN) accessible by the users through said communication system, the application being of a type in which users of the application form time-variable virtual communities of users that temporarily interact for the purposes of the application. The method includes: users' registration with the server-side of the application (AS), to provide candidates for said virtual communities; creation, from the candidates, of a list of the members of each virtual community ("buddy list") in a buddy list management unit (DBLM) in said presence enabled network (PEN); notification of the buddy list by the list management unit (DBLM) to client units (DBLC) in the user equipment (UE) of members of the community; and displaying the notified list on the user equipment (UE) of each member receiving it.

## Description

### Field of the invention

The present invention refers to communication systems supporting presence based services, and more particularly it concerns a method of and an apparatus for centrally managing the buddy lists, i. e. the contact lists of users (buddies) interacting through said system for a presence-enabled application in said services.

Preferably, but not exclusively, the invention is intended for managing buddy lists of presence enabled applications available to users of mobile communication systems.

### Background of the Invention

Presence based services are services available since some years for wireline Internet users, in particular in connection with Instant Messaging service, to allow users of the Instant Messaging service to keep track of the online status, availability, location, etc. of their correspondents and to be informed of changes in the correspondents' conditions.

The essential features of an IM&P (Instant Messaging and Presence) service are disclosed in documents RFC 2778 "A Model for Presence and Instant Messaging" by M. Day et al., February 2000, and RFC 2779 "Instance Messaging/Presence Protocol Requirements" by M. Day et al., of the IETF (Internet Engineering Task Force). Said documents are available at IETF site http://www.ietf.org/rfc.html.

This kind of services are presently being proposed also for wireless environment, and different organisations have developed, or are developing presence service specifications/recommendations for such environment. We may mention here: Open Mobile Alliance (OMA) through the Wireless Village (WV) initiative, IETF with SIMPLE (SIP [Session Initiation Protocol] for Instant Messaging and Presence Leveraging Extensions) and XMPP (Extensible Messaging and Presence Protocol); PAM (Presence and Availability Management) Forum; 3GPP (3rd Generation Project Partnership) with Presence Services in IMS (IP [Internet Protocol] Multimedia Subsystem) Architecture.

At present, besides instant messaging, a number of other applications exploiting the presence information (also called presence enabled applications) are being developed, for both fixed and wireless networks. Network operators and service providers are attempting to capture the end users' interest by more and more appealing interactive multimedia services, for both entertainment and information purposes.

Provision of said services often results in putting in contact people who share a common interest at a specific time and for a certain period, that is in the creation of groups or virtual communities whose members are varying in time (dynamic communities). A typical example could be an interactive game where participants pass from one game phase or level to another one through an elimination process in which they challenge other participants: in such case the virtual community may comprise the participants who are at a given phase in the game. When creating a virtual community of that kind, the problem arises of managing the contact lists of the members of the community so as to properly cope with the membership evolution.

Up to now, buddy lists are understood as pure contact lists or address books, which are directly set up and maintained by the users by adding known users (buddies whose names and addresses are known) or unknown buddies who are available for being contacted from directory servers. Such contact lists can be either stored in the user equipment (e.g. mobile phone, PC) or in a network server. In the latter case, a suitable protocol allows the users to manage and retrieve contact lists stored in the server.

Examples of such protocols are the XCAP [Extensible Markup Language (XML) Configuration Access Protocol] protocol proposed by IETF (see Internet Draft draft-ietf-simple-xcap-02, "Extensible Markup Language (XML) Configuration Access Protocol (XCAP)", by J. Rosenborg, available at the IETF site mentioned above), and the CSP (Client-Server Protocol) of OMA (see the document OMA-IMPS-WV-CSP-V1_2-20030117-D available at http://www.openmobilealliance.org). In particular the latter discloses the manner in which a user of the so-called Group Service (see also OMA-IMPS-WV-Arch-V1_2-20030117-D) can create and manage groups by means of suitable messages.

The known solutions are not suitable for a dynamic environment, since they do not contain any feature for maintaining the alignment between the server and the users. The users should have to periodically poll the server to see whether the centrally stored buddy lists have changed. This would entail a lot of message exchange over the network, which, in case of mobile network, leads to a waste of radio resources and, if a user has to update several lists, this is a rather long and boring operation.

The invention provides a solution to this problem.

### Summary of the invention

The invention, in a first aspect, provides a method of managing contact lists in a presence enabled application supported by a communication system and having a client side on a user equipment and a server side within a presence enabled network, when the application is of a type in which users form time-variable virtual communities of users that temporarily interact for the purposes of the application. The method comprises the following steps:
users' registration with the server-side of the application, to provide candidates for said virtual communities;
creation, from the candidates, of at least one buddy list of the members of each virtual community in a buddy list management unit in said presence enabled network;
notification of said at least one buddy list by the list management unit to client units in the user equipment of the list members;
displaying the notified list on the user equipment of each member receiving it.

The invention provides also an apparatus for implementing the method, comprising:
a list managing unit in said presence enabled network, arranged to create application-specific lists of the community members (buddies) from users having registered to the application with an application server in said presence enabled network, and to automatically notify said lists to members thereof, when the need arises;
a list client unit on the equipment of each user, arranged to receive a list provided by said list-managing unit and to co-operate with the client side of the application for displaying the notified list on said user equipment.

The invention further provides a communication system supporting the method and including the apparatus.

### Brief description of the drawings

A preferred embodiment of the invention, given by way of non-limiting example, will now be disclosed with reference to the accompanying drawings, in which:
- Fig. 1 is a schematic diagram showing a first embodiment of an apparatus according to the invention applied in a mobile communication system;
- Fig. 2 is a simplified schematic diagram of a second embodiment of the apparatus according to the invention;
- Fig. 3 is a general flow chart of the invention;
- Fig. 4 is a pictorial diagram showing the server-side dynamic buddy list and the user-side lists for an exemplary application of the invention;
- Figs. 5 to 8 are flow charts of the operations of the server-side component of the apparatus according to invention; and
- Figs. 9 and 10 are flow charts of the operations of the user-side component of the apparatus according to invention, in two different configurations.

### Description of the preferred embodiment

The invention concerns applications running either on Application Servers (e.g. SIP Application Servers) or on generic Web Servers. Examples are multiparty/ interactive games or, in general, multiparty applications demanding temporary interaction of a user (buddy) with other users. The invention applies when the buddies can change in time, so that a user should have to manage a plurality of "dynamic" contact lists (Dynamic Buddy Lists, DBLs).

By using the invention, the applications are provided with a tool enabling the management of dynamic virtual communities, in the respect of user privacy. Each virtual community can be seen as a group from which several buddy lists (BL) derive. Management includes creation, modification and deletion of the lists and, last but not least, distribution of the lists to the members automatically, when required by the application. Each member of such virtual community will see other members on a dedicated BL. The community members (and hence the buddy list members) are not defined by each end user, but they are determined by the application possibly on the basis of presence-related criteria (filter criteria), defined e.g in terms of conditions based on published presence and availability information (where "availability" denotes the willingness to be reachable by all other users of the same application, and can depend also on the user's location). For instance, the filter criteria could be: status equals "online". and location equals "City A". In other words, the application can require that only those end users who are in a specific presence status and/or location are included in a given buddy list.

Depending on the criteria of admission of the users to the virtual community, two types of DBLs have been identified:
DBLs with fixed buddies (Closed DBL): the buddies in a list are all users having registered at the moment of the list creation and they do not change (but new lists can be created);
DBLs with changing buddies (Open DBL): the buddies enter and exit the list on the basis of the filter criteria and can be added and removed after list creation.

The applications can also impose presence and avaialbility based criteria for the modality by which the list is delivered to the buddies (delivery criteria): e.g. the list can be provided as soon as a buddy goes on line and/or if the buddy is at a given location.

End users (i.e. the buddies) benefit from the DBL capability, but their control on DBL functionality is only indirect: this dispenses the users from handling all contacts related to every different application they decide to subscribe. End users only have to register/deregister with the selected application and then they will be notified of contact lists associated to the application. To cope with the privacy aspects, when registering, end users will provide one or more aliases in addition to their identity: the actual identity will then be known only to the service/application administrator, and only the alias will be shown on the terminal of the other users. The users will have the possibility of defining one or more aliases for each of the virtual communities they are members within a given service.

The Dynamic Buddy List capability needs to be supported at both the server and the client (user) side, and an apparatus according to the invention will comprise a first component, named DBL Manager (DBLM), at the server side, and a component named DBL Client (DBLC) at the client side, on the equipment of each user (e.g. mobile phone, personal computer, personal digital assistant...).

The server-side component DBLM is responsible for the dynamic creation, updating and deletion of service specific buddy lists, possibly depending on presence and/or availability related criteria, as stated above. DBLM is also responsible for the delivery of the list to the end users. Also delivery may be ruled by presence and/or availability related criteria. For its operations, DBLM has to co-operate with both the server side of the application and with a presence server.

The client-side component DBLC is responsible for displaying the buddy list, including, if requested, the presence status of all buddy list members, and for keeping the list aligned with updates coming from the network (i.e. from DBLM). For such operation, DBLC has to co-operate with the client side of the application.

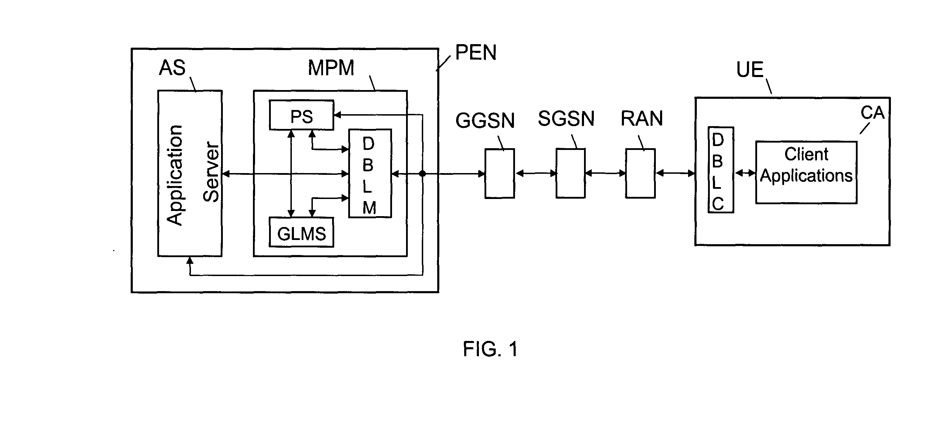

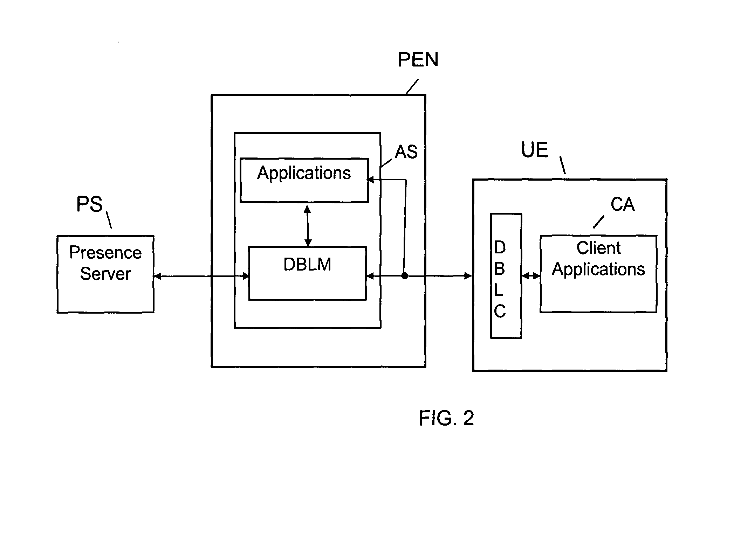

Two embodiments of an apparatus for implementing the invention will now be described with reference to Figs. 1 and 2. The description refers to the use of the invention in a wireless communication network, such as a 3rd generation mobile network.

In Fig. 1, reference symbol UE denotes the user equipment, e.g. a mobile phone or a PDA (Personal Digital Assistant), and reference symbol PEN denotes a presence enabled network, i. e. a network managing presence based services, which is accessible by user terminal UE through the mobile communication network, schematised here by the radio access network RAN, the Service GPRS (General Packet Radio Service) Supporting Node SGSN and the Gateway GPRS Supporting Node GGSN.

User equipment UE will store the client side of the presence enabled applications to which the user has access (Client Applications CA), and will be equipped with the client-side component DBLC of the Dynamic Buddy List capability.

Within network PEN, we have indicated an application server AS, containing the server-side components of the presence enabled applications, and a block MPM including the units necessary for managing the user presence and availability for groups of users of a mobile communications network. To this end, MPM includes presence server PS and a group and list managing server GLMS. Units performing the functions of MPM are commercially available, an example being the Mobile Presence Manager of Siemens AG. In such case, block GLMS implements the Contact Advisor Management function. In this embodiment of the invention, the server-side component DBLM of the Dynamic Buddy List capability is also part of MPM. Even if, for sake of clarity, DBLM has been shown as a self-standing unit coupled with PS and GLMS, it can be implemented within PS as an extension of GLMS, or within GLMS or yet as a unit performing part of the functions of a classical presence server and group manager.

Communication between DBLM and DBLC (i.e. notification of the lists) could take place by using SIP/SIMPLE or any other protocol suitable for presence services, such as the above-mentioned WV-CSP. It is to be noted that the Mobile Presence Manager is compliant with all standards/specifications concerning presence service for mobile networks mentioned in the introduction of the specification.

Assuming the use of SIP/SIMPLE, the interaction between DBLC and the DBLM can be based:
either on SIP MESSAGE/INFO requests sent by DBLM to DBLC (passive client scenario)
or on SIP SUBSCRIBE requests to a new event, i.e. template package, (e.g. dynamicbuddylist) defined within the "presence" event package sent by DBLC to DBLM, and subsequent SIP NOTIFY messages (active client scenario) from DBLM to DBLC. In such scenario, DBLC can specify which kind of notifications it is interested to and how long the notifications are to be sent.

In case of dynamic buddy list delivery within a SIP MESSAGE/INFO message body, the SIP requests need to be characterised by a proprietary SIP message header or by a proprietary Content-Type in order to be recognised by the client as DBL updates. In case of DBL delivery within presence event package the Event header is used for discriminating incoming messages.

Interaction between DBLM and PS can be based on internal interfaces.

Interaction between DBLM and the server-side application can be based on any of the following protocols, well known to the skilled in the art:
- SOAP (Simple Object Access Protocol) of W3C, which is a protocol allowing HTTP messages to be transferred by coding some information in XML (Extended Markup Language); details on this protocol are available at site http://www.w3.org/TR/soap12.
- RMI (Remote Method Indication), which is an application allowing communication between applications hosted on different machines;
- an extension of the HTTP/XCAP or of PAM standard.

Within MPM, presence server PS should support the definition of application-specific presence attributes by the administrator. Those attributes should provide two items of information, namely, the willingness to be reachable for a specific application (i.e. availability/unavailability for that application) and, in case of availability, the aliases published for that application.

Network PEN also comprises units entrusted with session control (like CSCF = Call Session Control Functions), authentication, interworking etc. and with the storage of the data relevant to the presence service users (like HSS = Home Subscriber Server). Said units are not shown, as they are not of interest for the understanding of the invention.

Fig. 2 shows a second embodiment of the invention, where DBLM is incorporated into the application server AS. In Fig. 2, components identical to those shown in Fig. 1 are denoted by the same reference symbols. For sake of simplicity, the mobile network units connecting UE to PEN are no longer shown. In such an embodiment, DBLM has to interact with a conventional presence server PS through a presence protocol like SIMPLE, WV-CSP or PAM, and acts as a watcher for the presence information. The interaction between the server-side application and DBLM is based on a proprietary API (Application Program Interface) based on Java/RMI or on an extension of PAM interface. The choice will depend, inter alia, on whether the application and the DBLM are located in the same or in different machines.

It is noted that at present the first embodiment appears to be the most preferred embodiment, as the integration of DBLM and PS within the same unit results in a more efficient access to the presence information.

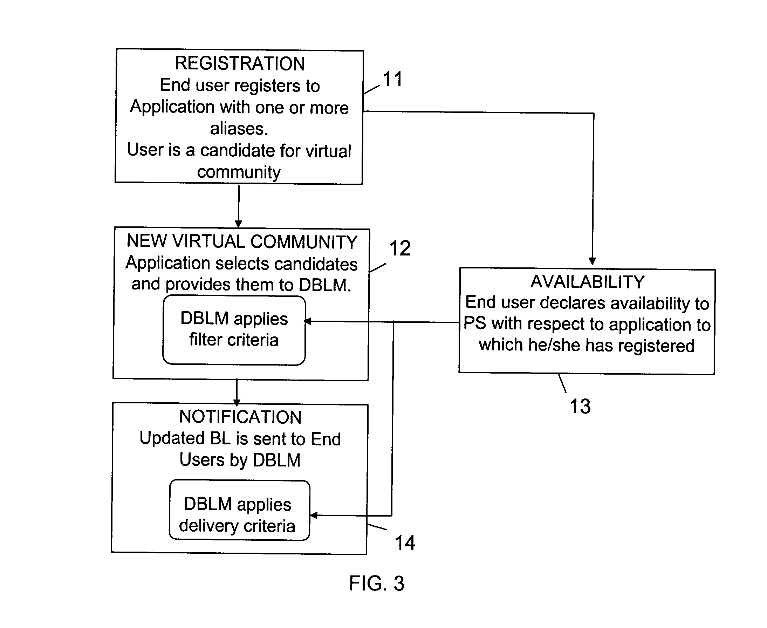

Fig. 3 is a general flow chart of the method of the invention. The first operation (step 11) is the registration by the users with the application. In performing registration, the users have to provide one or more aliases (all referring to the same URI) and only the alias will be visible to the other members. After registration a user is a candidate for being inserted in a virtual community for that application. The registration of a new user and the user's alias(es) are communicated by the application to DBLM.

After registration, the application creates the virtual community (step 12) based on the registered users. The aliases of the members of the community are included together with the buddy URL into the Dynamic Buddy List for the application in DBLM.

For the community creation, the application can define application-specific filter criteria for selecting the actual members out of the candidates. As said, the filter criteria are generally related with presence information, for instance they can refer to presence status or availability of the users for the application (in the most general sense specified above). In such case the user is to declare his/her availability (step 13) and, in doing so, the user-side component DBLC will publish the alias in the presence document declaring such availability.

Filter criteria are applied when an open list is to be created. The resulting DBL can be updated in any moment by inserting/deleting contacts, according to the application-defined filter criteria. Filter criteria are applied by DBLM. If no filter criteria have been defined, the virtual community can be directly created by the application on the basis of candidates, i.e. registered users. In this case the application creates a Closed DBL. A closed DBL cannot be modified by inserting/deleting contacts, but new DBLs can be created if necessary. No interaction with the presence server is envisaged in this case, except for the evaluation of possible delivery criteria.

After virtual community creation/modification, the created/updated DBL is delivered ("Notification", step 14) to end users. The application can define application-specific delivery criteria, i.e. a policy to deliver updates messages to end users. Delivery criteria are applied by PS/GLMS. Also delivery criteria may be related with presence information, e.g. with the availability. In case no application-specific criteria have been defined (default delivery criteria), the list is delivered to all buddies included in the DBL as soon as the latter is created (or modified, if it is an open list).

Besides the list, the notification message can also convey additional, application-specific information about the buddies: for instance, in case of interactive game, the message can convey the game scores of the participants.

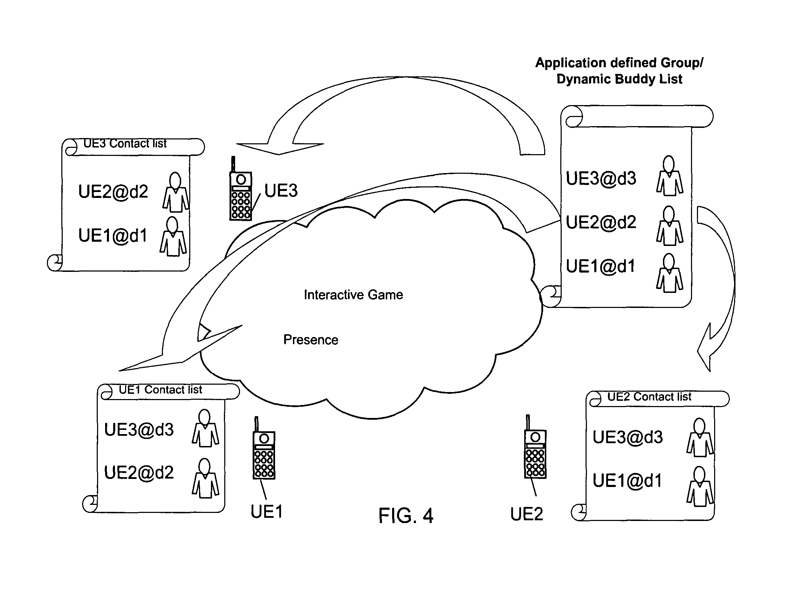

When notifying the list to the users, the destination buddy is removed from the list, so that the alias of the destination buddy does not appear on the local list displayed on the user terminal, as shown in Fig. 4.

What is said for registration applies also to the deletion of a user from the list: when the user asks to be deleted, the information is transmitted by the application to DBLM which updates the list (or defines a new list if the original list was a closed one) and sends the updated/new list to the users.

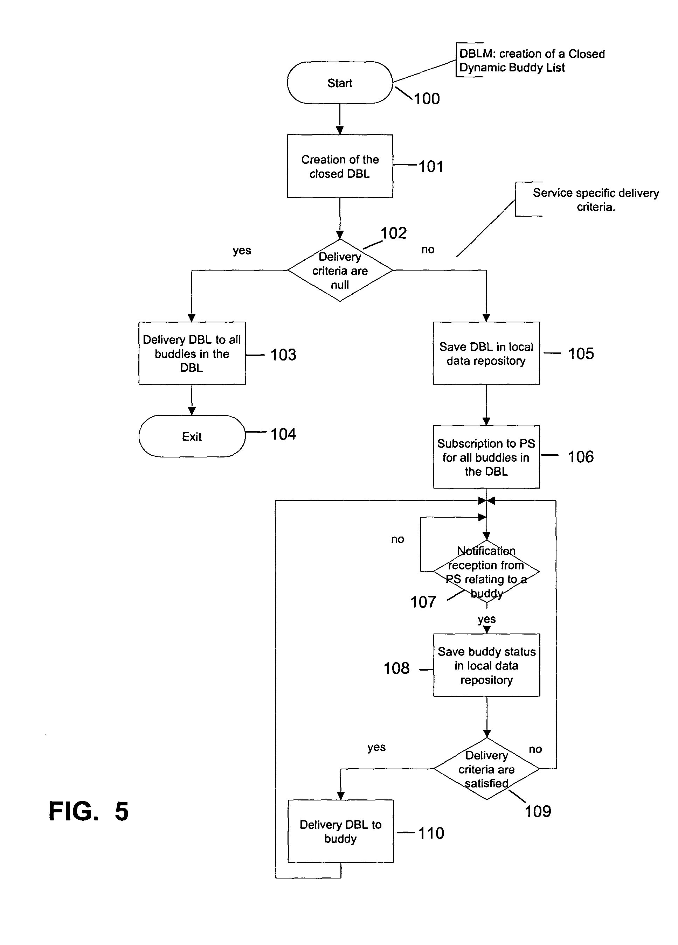

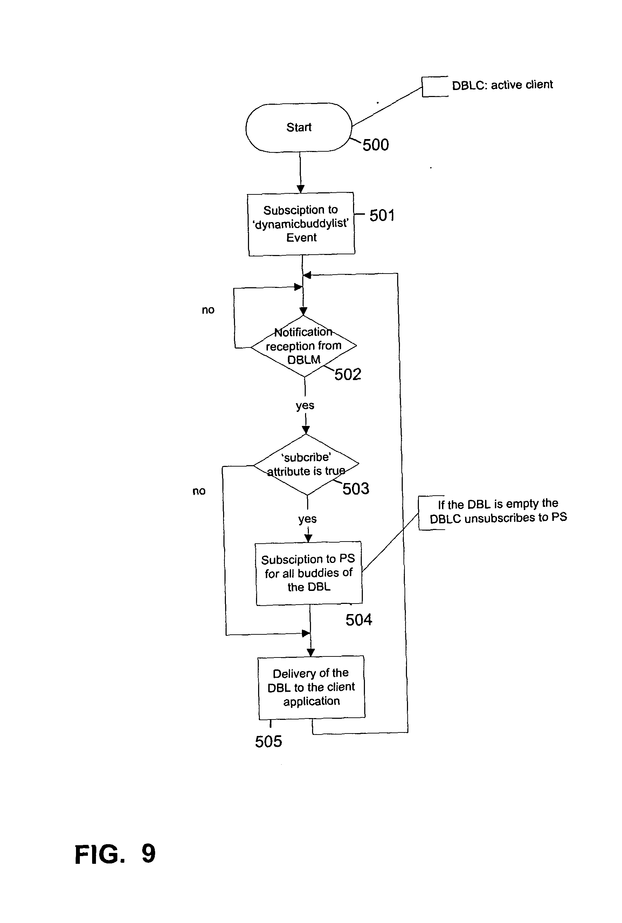

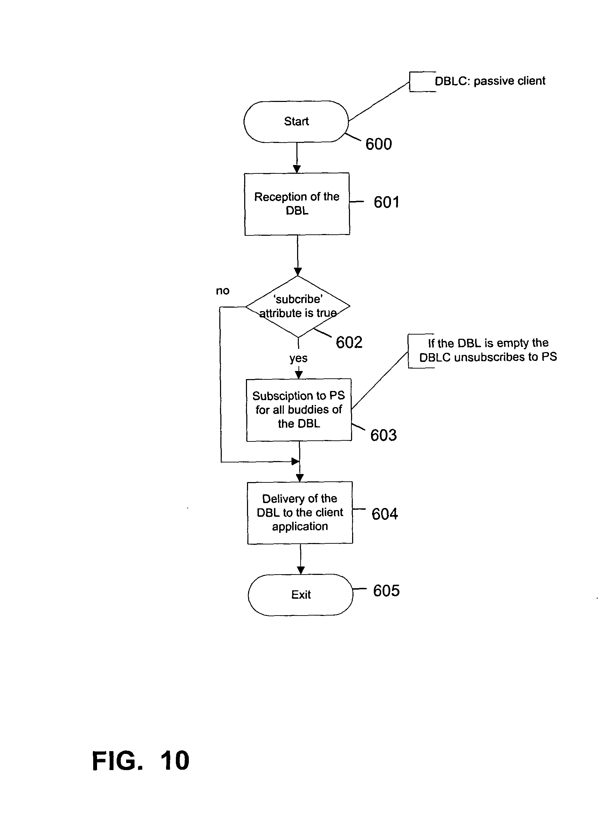

For a better illustration of the method, reference is made to the flow charts of Figs. 5 to 8, which show the operations of DBLM for the creation of a closed and an open buddy list, the deletion of a closed buddy list, and the addition/deletion of users to/from an open list, and of Figs. 9 and 10, which show the operations of DBLC for an active or a passive client configuration, respectively.

Referring to Fig. 5, after the creation of the list with all registered users (step 101), as said above, two options are possible (step 102): delivery takes place according to default criteria (indicated as "null" criteria in the flow charts), or service-specific delivery criteria have been set. In the first instance, DBLM sends the list to all buddies in DBL (step 103) and the operations end. If delivery criteria have been set, the list is saved in a local store (step 105) and a subscription is made by DBLM to PS for being informed of certain presence events for all buddies in the list (step 106). Then DBLM wait for notifications from PS. Upon reception of a notification concerning a buddy (output "yes" of step 107), the buddy status is stored (step 108). Then DBLM checks (step 109) whether the delivery criteria are met (e.g., the user is available for the specific application). In the negative, the process returns to waiting for another notification; in the affirmative the buddy list is actually delivered to the buddy (step 110). The process then returns to the wait for the notification.

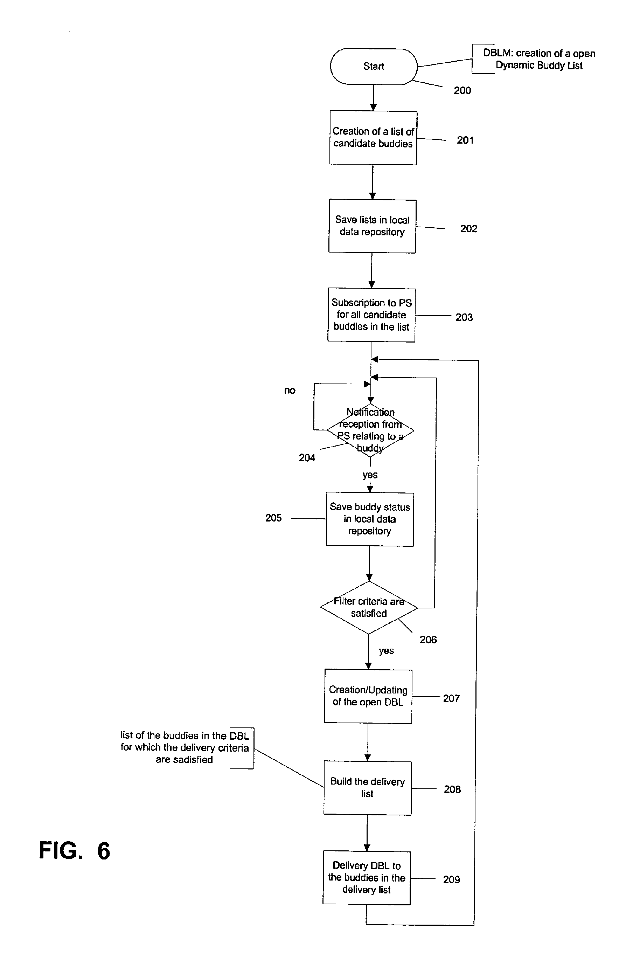

Referring to Fig. 6, the open list creation process starts with the creation of a list of the candidates (step 201) which is saved (step 202) in the local store. Filter criteria (e.g. availability) are set for the selection of the candidates. Thus, similarly to steps 106 to 108 (Fig. 5), a subscription to PS is made (step 203), notifications from PS are waited for (step 204) and the buddy status is stored (step 205) when a notification arrives. At step 206, there is checked whether the filter criteria are met for that buddy. In the negative, the process returns to waiting for another notification; in the affirmative the user is actually included in the buddy list (step 207). Then, a delivery list is created at step 208 with all buddies meeting the delivery criteria (based upon the notifications of step 204) and the list is then delivered to the buddies in the delivery list (step 209). The process then returns to the wait for the notification.

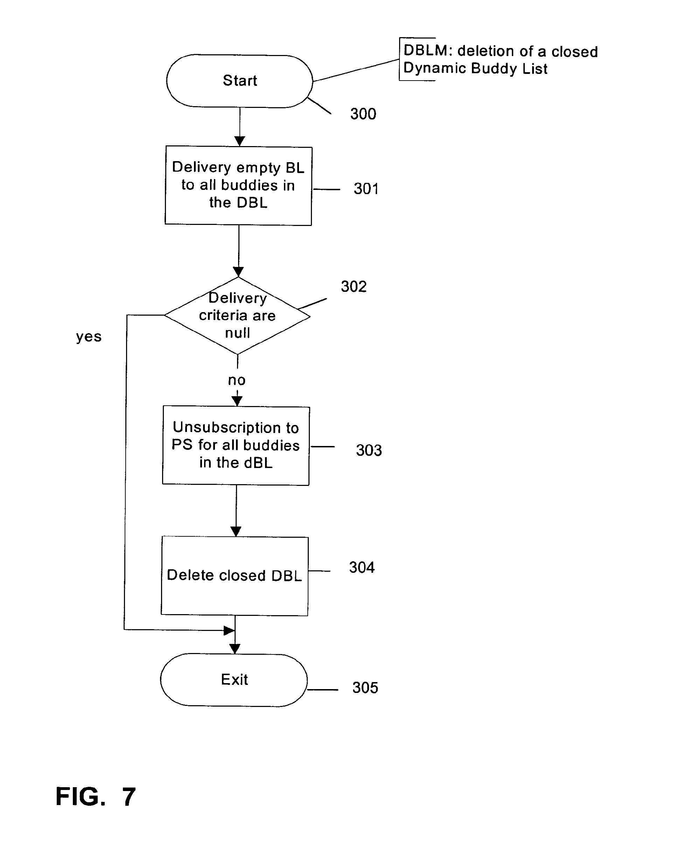

Referring to Fig. 7, the deletion process starts with sending an empty list to all buddies in the list (step 201) to destroy the client-side lists. Thereafter, if the delivery criteria are null (output yes of check 302), the process ends. If the delivery criteria are not null, and hence the list had been locally saved and a subscription to PS was made (see Fig. 5), the subscription is cancelled (step 303) and the list is deleted from the store (step 304). The process ends.

A similar procedure is performed also for cancellation of an open buddy list.

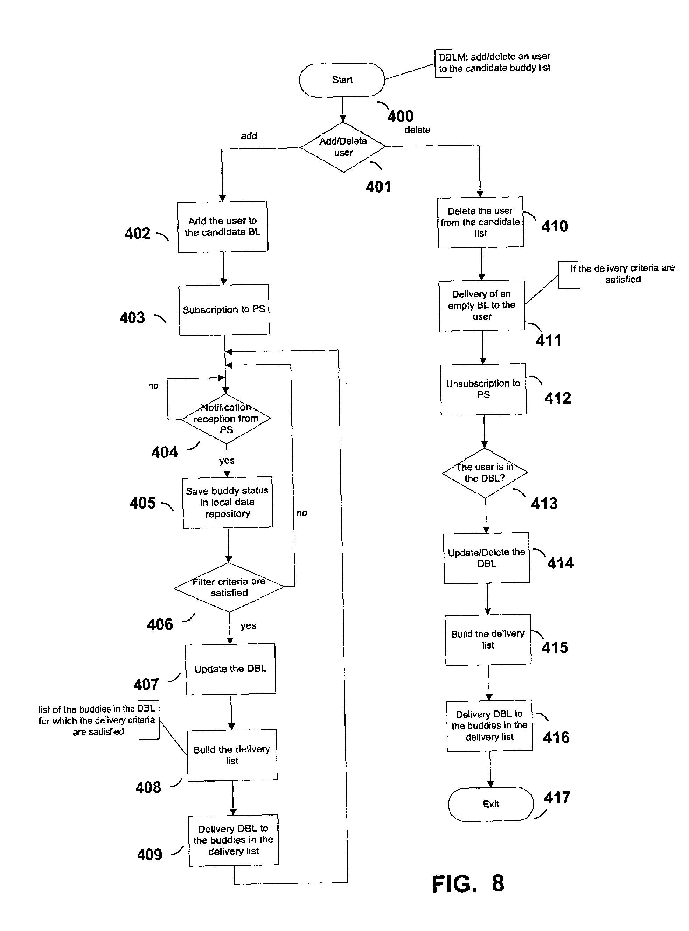

Fig. 8 shows the updating of an open buddy list. In case of a new registration, the user is added to the candidate list (step 402) and a subscription to PS is made for that buddy (step 403). The subsequent steps 404 to 409 correspond to steps 204 to 209 of Fig. 6 and no further discussion is necessary. In case a user cancels his/her registration, the user is deleted from the candidate list (step 410). Then, if the delivery criteria are met for that user, an empty list is sent to the user (step 411) and the subscription to PS is cancelled (step 412). Then it is checked whether the user is included in the buddy list (step 413) and, in the affirmative, the list is updated (or deleted, if the user is the only one). Then, the delivery list is built and the updated buddy list is sent to the buddies in the delivery list (steps 414, 415). Of course, if the user was not in the buddy list, the process ends with the negative outcome of check 413.

With reference to Fig. 9, an active client first subscribes to specific events in DBL management (step 501), thereby setting criteria for receiving the notifications from DBLM. Upon subscription, when a notification from DBLM arrives (step 502), a check is made on a "subscribe" attribute of the DBL update message (step 503). This attribute specifies whether or not a subscription to the presence document of the other buddies is requested. If the attribute is true, the subscription is made (step 504) and thereafter DBLC delivers the list to the client application (step 505) for having the list displayed on the terminal. If the attribute is not "true", the list is immediately delivered to the client application. After delivery, a new notification is waited for. Note that at step 505, if the DBL is empty (i. e. the list deletion is requested), DBLC is to unsubscribe to PS.

With reference to Fig. 10, in case of a passive client, upon reception of the DBL (step 601), DBLC performs steps 602 to 604 identical to step 503 to 505 above. However, after delivery, the process ends.

The above description clearly shows that the server-side management of the Dynamic Buddy Lists allows overcoming the limitations of the conventional buddy lists and of the conventional contact and group management functionalities, like those proposed by OMA. The proposed solution has, inter alia, the following advantages:
it makes the user free from the need of maintaining updated buddy lists;
it provides server-side applications/services with a tool for managing application-specific buddy lists, including buddy list creation, modification, deletion and buddy list distribution to the end users;
it hides to end users the real identity of buddy list members, who are identified only through their alias, so that privacy requirements are satisfied;
it allows server-side applications/services to provide optional information for each buddy included in a buddy list.

It is evident that the above description has been given only by way of non-limiting example, and that changes and modification are possible without departing from the scope of the invention.

## Claims

1. A method of managing buddy lists in a presence enabled application supported by a communication system and having a client side (CA) on a user equipment (UE) and a server side (AS) within a presence enabled network (PEN) accessible by the users through said communication system, the application being of a type in which users of the application (buddies) form time-variable virtual communities of users temporarily interacting for the purposes of the application, the method being **characterised by** the following steps:
users' registration with the server-side of the application (AS), to provide candidates for said virtual communities;
creation, from the candidates, of at least one buddy list of the members of each virtual community in a buddy list management unit (DBLM) in said presence enabled network (PEN);
notification of said at least one buddy list by the list management unit (DBLM) to client units (DBLC) in the user equipment (UE) of list members; and
display of the notified list on the user equipment (UE) of each member receiving it.

2. The method as claimed in claim 1, **characterised in that** said registration phase comprises the communication by the user to the server side of the application (AS) of at least one application-specific alias, and said creation phase results in the association between the buddy Uniform Resource Locator, or URL, and alias for each buddy in the buddy lists.

3. The method as claimed in claim 2, **characterised in that** said registration phase comprises the communication, by the user to the server-side of the application (AS), of one or more alias identities for each virtual community the user wishes to be member.

4. The method as claimed in claim 1, **characterised in that** said creation phase includes creating either closed buddy lists with a fixed population of candidates, including all users having registered to the application, or open buddy lists including the candidates meeting application-specific filter criteria.

5. The method as claimed in claim 4, **characterised in that** said creation phase includes creating a new closed buddy list when a variation in the population of candidates occurs.

6. The method as claimed in claim 4, **characterised in that** said creation phase comprises updating a created open list by adding/deleting members based on said filter criteria.

7. The method as claimed in any preceding claim, **characterised in that** said notification phase comprises delivering a buddy list to buddies meeting delivery criteria.

8. The method as claimed in claim 7, **characterised in that** said delivery criteria are default delivery criteria, and the notification phase comprises delivering a buddy list to all buddies in the list as soon as the list is created or updated.

9. The method as claimed in claim 3, 6 or 7, **characterised in that** said filter criteria and said delivery criteria are related with users' presence information, and the method comprises a subscription of the list managing unit (DBLM) to presence information for all candidates.

10. The method as claimed in claim 9, **characterised in that** said presence information is related with the users' status and/or the users' availability for a specific application and/or the user location.

11. The method as claimed in any of claims 7 to 10, **characterised in that** said notification phase comprises removing the destination member from a list when the same is delivered to the list members.

12. The method as claimed in claim 1, **characterised in that** said displaying phase comprises displaying, on the user equipment of each user, presence information relating to the other members of the list.

13. The method as claimed in claim 1, **characterised in that** it further comprises deletion of a buddy list by the following steps:
sending, by the list managing unit (DBLM) to all members of the list, an empty buddy list to force the client units(DBLC) to destroy their local buddy lists;
deleting, in the list managing unit (DBLM), buddy lists saved therein.

14. An apparatus for managing buddy lists in a presence enabled application supported by a communication system and having a client side (CA) on a user equipment (UE) and a server side (AS) within a presence enabled network (PEN) accessible by the users through said communication system, the application being of a type in which users of the application (buddies) form time-variable virtual communities of users temporarily interacting for the purposes of the application, the apparatus being **characterised in that** it comprises:
a list managing unit (DBLM) in said presence enabled network (PEN), arranged to create application-specific lists of the community members (buddies) from users having registered to the application with an application server (AS) in said presence enabled network (PEN), and to automatically notify said lists to members thereof, when the need arises;
a list client unit (DBLC) on the equipment of each user, arranged to receive a list or lists from said list-managing unit (DBLM) and to co-operate with the client side of the application for displaying the notified list(s) on said user equipment (UE).

15. The apparatus as claimed in claim 14, **characterised in that** said list managing unit (DBLM) is arranged to create the lists by including the alias identities of the members into said lists, said alias identities being communicated by the buddies when registering to the application.

16. The apparatus as claimed in claim 14 or 15, **characterised in that** said list managing unit (DBLM) is arranged to create either closed buddy lists with a fixed population of candidates, including all users having registered to the application, or open buddy lists including the candidates meeting application-specific filter criteria.

17. The apparatus as claimed in claim 16, **characterised in** said list managing unit (DBLM) is arranged to create a new closed buddy list when a variation in the population of candidates occurs.

18. The apparatus as claimed in claim 16, **characterised in that** said list managing unit (DBLM) is arranged to update a created list by adding/deleting members based on said filter criteria.

19. The apparatus as claimed in claim 18, **characterised in that** said list managing unit (DBLM) is arranged to deliver a buddy list to buddies meeting delivery criteria.

20. The apparatus as claimed in claim 19, **characterised in that** said delivery criteria are default delivery criteria, and said list managing unit (DBLM) is arranged to deliver a buddy list to all buddies in the list as soon the list is created.

21. The apparatus as claimed in claim 16 or 19, **characterised in that** said filter criteria and said delivery criteria are related with users' presence information, and said list managing unit (DBLM) is arranged to subscribe, with a presence server (PS) in said presence enabled network (PEN), to presence information for all candidates.

22. The apparatus as claimed in claim 21, **characterised in that** said presence information is related with the users' status and/or the users' availability for a specific application and/or the user location.

23. The apparatus as claimed in claim 14, **characterised in that** said list managing unit (DBLM) is arranged to remove the destination member from a list when delivering it to the list members, and each client unit (DBLC) is arranged to cause displaying of a local buddy list containing the alias identities of the other buddies in the list.

24. The apparatus as claimed in claim 14, **characterised in that** said list client unit (DBLC) is configured either in an active configuration, in which it can subscribe to notifications concerning specific events relating to the buddy list management, or in a passive configuration, in which it receives notifications as determined by said list managing unit (DBLM).

25. The apparatus as claimed in claim 24, **characterised in that** said list client unit (DBLC) is arranged to subscribe, with a presence server (PS) in said presence enabled network (PEN), to presence information of the other buddies and to cause displaying said presence information together with the local list.

26. The apparatus as claimed in claim 14, **characterised in that** said communication system is a mobile communication system.

27. The apparatus as claimed in claim 26, **characterised in that** said list managing unit (DBLM) is implemented, together with a presence server (PS) in a unit (MPM) intended to managing the presence information of mobile system users, said presence server (PS) and said presence information managing unit belonging to said presence enabled network (PEN).

28. The apparatus as claimed in claim 26, **characterised in that** said list managing unit (DBLM) is implemented within the application server (AS) and is arranged to interact with a presence server (PS) in said presence enabled network (PEN), by means of a presence protocol in which it acts as a watcher.

29. A communication system supporting presence enabled applications having a client side (CA) on a user equipment (UE) and a server side (AS) within a presence enabled network (PEN) connected to the communication system, the application being of a type in which users of the application (buddies) form time-variable virtual communities of users that temporarily interact for the purposes of the application, the system being **characterised in that** the buddy lists for said applications are managed at the server side, by the method as claimed in any of claims 1 to 13.

30. A communication system supporting presence enabled applications having a client side (CA) on a user equipment (UE) and a server side (AS) within a presence enabled network (PEN) connected to the communication system, the application being of a type in which users (buddies) of the application form time-variable virtual communities of users that temporarily interact for the purposes of the application, the system being **characterised in that** it includes an apparatus (DBLM, DBLC) for performing a server-side management of buddy lists for said applications as claimed in any of claims 14 to 28

31. A communication system as claimed in claim 29 or 30, **characterised in that** it is a mobile communication system.
